# EUROPÄISCHE PATENTSCHRIFT

(11) **EP 3 708 049 B1**
(45) Veröffentlichungstag und Bekanntmachung des Hinweises auf die Patenterteilung: **22.11.2023**
(21) Anmeldenummer: 19163042.5
(22) Anmeldetag: 15.03.2019
(51) Int. Cl.: A47J 47/00

(54) **ARBEITSUNTERLAGE UND SYSTEM**
CUTTING BOARD AND SYSTEM
PLANCHE À DÉCOUPER ET SYSTÈME

(43) Veröffentlichungstag der Anmeldung: 16.09.2020
(73) Patentinhaber: Vorwerk & Co. Interholding GmbH, 42275 Wuppertal (DE)
(72) Erfinder: FRIELINGHAUS, Robert, 44803 Bochum (DE); STARFLINGER, Frank, 44793 Bochum (DE); HEYNEN, Andreas, 42477 Radevormwald (DE); THIES, Felix, 42115 Wuppertal (DE); LANDSECKER, Kai, 40213 Düsseldorf (DE); CHARAPOULOS, Philipp, 40878 Ratingen (DE); VAN TEEFFELEN, Niklas, 40223 Düsseldorf (DE)
(74) Vertreter: Von Rohr Patentanwälte Partnerschaft mbB

(56) Entgegenhaltungen:
- WO-A1-97/40730
- WO-A1-2015/100471
- DE-U1-202006 016 445
- US-A- 5 904 271
- US-A1- 2009 322 004
- US-A1- 2018 263 425
- US-B2- 8 757 602
- US-B2- 10 459 104

## Beschreibung

Die vorliegende Erfindung betrifft eine Arbeitsunterlage sowie ein System mit einer Arbeitsunterlage und einem vorzugsweise topfförmigen Gefäß.

Eine Arbeitsunterlage im Sinne der vorliegenden Erfindung ist vorzugsweise eine plattenartige bzw. flächige Vorrichtung, die beispielsweise als Unterlage bei der Zubereitung von Speisen verwendet wird. Insbesondere ist eine Arbeitsunterlage im Sinne der vorliegenden Erfindung ein Schneidebrett zum Schneiden von Lebensmitteln. Eine derartige Arbeitsunterlage kann jedoch grundsätzlich auch anderweitig verwendet werden, beispielsweise als Unterlage in Laboratorien.

Im Kontext der vorliegenden Erfindung werden die Begriffe "Arbeitsunterlage" und "Schneidebrett" als Synonyme verwendet.

Die EP 2 840 932 A1 offenbart eine Arbeitsunterlage, die eine ausziehbare Halteeinrichtung für einen Behälter aufweist, wobei die Halteeinrichtung aus einem U-förmigen Bügel besteht, der an einer Unterseite der Arbeitsunterlage befestigt ist. Eine derartige Arbeitsunterlage ist jedoch konstruktionsbedingt dick und schwierig zu reinigen.

Die WO 97/40730 A1 offenbart eine Arbeitsunterlage mit einer runden Aufnahme, um ein Gefäß randseitig zu halten. Die Aufnahme ist größer als ein Halbkreis, um das Gefäß in der Halteposition zu greifen und gegen ein horizontales Herausziehen zu sichern.

Die WO 2015/100471 A1 offenbart eine Arbeitsunterlage mit einer randseitigen Öffnung zum Einhängen eines Gefäßes.

Die US 8,757,602 B2 offenbart eine Arbeitsunterlage mit einem plattenartigen Grundkörper und einer vom Grundkörper abstehenden Leiste, an der zwei Vorsprünge vorgesehen sind, um ein Gefäß mit entsprechenden Vertiefungen daran zu befestigen.

Die US 5,904,271 A offenbart eine Arbeitsunterlage mit zwei randseitigen Aussparungen auf der Unterseite der Arbeitsunterlage, in die der Rand speziell angepasster Behälter von unten eingreifen kann.

Die DE 20 2006 016 445 U1 offenbart ein Schneidbrett mit einer Schublade zur Abfallaufnahme. Die Abfallschublade ist unterhalb der Schneidfläche angeordnet und zwischen zwei Positionen so verschiebbar, dass in einer ersten Position Abfall über den Schneidflächenrand in die Abfallschublade verlagerbar ist und in einer zweiten Position die Abfallschublade von dem Schneidbrett vollständig entkoppelt ist. Vorzugsweise ist keine Arretierungsvorrichtung vorgesehen, so dass die Schublade durch eine lineare ungehinderte Bewegung verschoben werden kann.

Die US 2019/0064381 A1 betrifft ein transportables Gerät zum Aufspüren von Munitionskugeln oder Fremdkörpern, insbesondere bei erlegtem Wild. Das Gerät kann eine integrierte Waage, ein Schneidbrett und eine Schublade zur Aufbewahrung kleiner Gegenstände, wie einer Pinzette, aufweisen.

Vor diesem Hintergrund liegt der Erfindung die Aufgabe zugrunde, eine verbesserte Arbeitsunterlage anzugeben, wobei ein einfacher, stabiler und/oder kompakter Aufbau und/oder eine einfache, komfortable und/oder hygienische Benutzung, insbesondere Zubereitung von Speisen, ermöglicht oder unterstützt wird.

Die der Erfindung zugrundeliegende Aufgabe wird durch eine Arbeitsunterlage gemäß Anspruch 1 oder ein System gemäß Anspruch 11 gelöst. Vorteilhafte Weiterbildungen sind Gegenstand der Unteransprüche.

Die vorschlagsgemäße Arbeitsunterlage weist einen plattenartigen bzw. flächigen Grundkörper und eine vom Grundkörper abstehende Leiste auf, wobei die Leiste einen Anschlag - beispielsweise für eine Küchenarbeitsplatte - aufweist oder bildet. Mittels der Leiste ist es möglich, die Arbeitsunterlage beispielsweise auf einer Küchenarbeitsplatte auszurichten und ein ungewolltes Verschieben der Arbeitsunterlage zu verhindern.

Die vorschlagsgemäße Arbeitsunterlage weist eine (integrierte) Halteeinrichtung auf, um ein Gefäß, wie den Behälter eines Mixers, insbesondere temporär bzw. bei der Zubereitung von Lebensmitteln zu halten bzw. in die Arbeitsunterlage einzuhängen, insbesondere derart, dass von der Arbeitsunterlage die zubereiteten Lebensmittel unmittelbar in das vorstehende Gefäß überführt bzw. geschoben werden können. Zu diesem Zweck ist die Halteeinrichtung dazu ausgebildet, das Gefäß seitlich bzw. randseitig zu halten, insbesondere derart, dass die Arbeitsunterlage das Gefäß nur partiell überdeckt.

Vorzugsweise ist die Arbeitsunterlage einstückig und/oder starr ausgebildet und/oder weist die Arbeitsunterlage keine beweglichen Bauteile auf. Die Leiste bildet die Halteeinrichtung. Auf diese Weise wird eine besonders robuste und kompakte bzw. einfache Bauweise ermöglicht. Darüber hinaus erlaubt eine derartige Konstruktionsweise eine besonders einfache Reinigung der Arbeitsunterlage.

Die Halteeinrichtung ist vorzugsweise auf einer Stirnfläche der Arbeitsunterlage bzw. der Leiste angeordnet, um das Gefäß stirnseitig bzw. auf einer einem Benutzer zugewandten Seite in die Arbeitsunterlage bzw. die Leiste einzuhängen.

Gemäß einer besonders bevorzugten Ausführungsform ist die Halteeinrichtung zumindest im Wesentlichen kreissegmentartig ausgebildet, um ein rundes Gefäß, wie den Behälter eines Küchengeräts oder einen Kochtopf, randseitig zu untergreifen bzw. zu halten.

Die Arbeitsunterlage bzw. Halteeinrichtung ist vorzugsweise dazu ausgebildet, das Gefäß sowohl von unten bzw. mittels eines Halteelements zu halten als auch von oben bzw. mittels eines oberseitigen Anschlags abzustützen, insbesondere derart, dass das Gefäß eingeklemmt ist und/oder ein Herauskippen des Gefäßes aus der Halteeinrichtung verhindert wird.

Die Halteeinrichtung weist eine Aufnahme für das Gefäß auf, wobei die Aufnahme durch eine Aussparung in der Leiste gebildet und seitlich und zu der Arbeitsfläche durch die Leiste begrenzt ist.

Das Gefäß ist gegen ein (versehentliches) Herausziehen aus der Halteeinrichtung sicherbar. Zu diesem Zweck weist die Arbeitsunterlage ein Sicherungselement auf, das das Gefäß in der Halteposition vorzugsweise formschlüssig gegen ein Herausziehen aus der Arbeitsunterlage sichert.

Das Sicherungselement ragt zumindest im Wesentlichen mittig in die Aufnahme der Halteeinrichtung hinein. Das Sicherungselement ist vorzugsweise als Vorsprung ausgebildet und ragt mittig bzw. in der Gebrauchslage der Arbeitsunterlage von oben in die Halteeinrichtung bzw. die Aufnahme hinein.

In der Halteposition des Gefäßes greift das Sicherungselement - von oben bzw. randseitig - in das Gefäß ein bzw. sind das Sicherungselement und das Gefäß formschlüssig miteinander verbunden, insbesondere derart, dass ein Herausziehen aus der Halteeinrichtung verhindert wird.

Es ist also bevorzugt, dass das Gefäß in der Halteeinrichtung bzw. Halteposition - abgesehen vom notwendigen Spiel - nicht verschiebbar bzw. translatorisch bewegbar ist, also keinen Translationsfreiheitsgrad aufweist. Das Gefäß wird folglich vorzugsweise in einer vordefinierten Halteposition eingehängt, in der die relative Position des Gefäßes zu der Arbeitsunterlage festgelegt ist.

Um das Gefäß von der Halteeinrichtung zu lösen, ist das Gefäß relativ zu der Arbeitsunterlage kippbar, insbesondere derart, dass der Rand des Gefäßes an dem Sicherungselement vorbeigleiten und das Gefäß aus der Halteeinrichtung - im gekippten Zustand - herausgezogen werden kann.

Auf diese Weise wird eine besonders einfache und sichere Handhabung der Arbeitsunterlage ermöglicht oder unterstützt. Insbesondere wird das Risiko reduziert, das Gefäß versehentlich von der Halteeinrichtung zu lösen.

Das vorschlagsgemäße System weist eine derartige Arbeitsunterlage und ein vorzugsweise topfförmiges Gefäß auf. Auf diese Weise werden entsprechende Vorteile realisiert, sodass von einer Wiederholung dieser abgesehen wird.

Weitere Aspekte, Vorteile, Merkmale und Eigenschaften der vorliegenden Erfindung ergeben sich aus den Ansprüchen und der nachfolgenden Beschreibung einer bevorzugten Ausführungsform anhand der Zeichnung. Es zeigt:
- Fig. 1: eine perspektivische Darstellung eines vorschlagsgemäßen Systems mit einer vorschlagsgemäßen Arbeitsunterlage und einem in die Arbeitsunterlage eingehängten Gefäß;
- Fig. 2: eine perspektivische Darstellung der Arbeitsunterlage von unten;
- Fig. 3: eine schematische Ansicht der Arbeitsunterlage von der Seite;
- Fig. 4: eine schematische Ansicht der Arbeitsunterlage von unten;
- Fig. 5: einen schematischen Schnitt der Arbeitsunterlage entlang der in Fig. 4 eingezeichneten Schnittlinie V-V;
- Fig. 6: einen schematischen Schnitt der Arbeitsunterlage gemäß Fig. 5 beim Einhängen des Gefäßes;
- Fig. 7: einen schematischen Schnitt der Arbeitsunterlage gemäß Fig. 5 mit dem (vollständig) eingehängten Gefäß; und
- Fig. 8: eine schematische Darstellung der Arbeitsunterlage im Bereich einer Halteeinrichtung mit dem nur partiell dargestellten Gefäß.

In den teilweise nicht maßstabsgerechten, nur schematischen Figuren werden für gleiche, gleichartige oder ähnliche Bauteile und Komponenten dieselben Bezugszeichen verwendet, wobei sich entsprechende oder vergleichbare Eigenschaften und Vorteile ergeben, auch wenn von einer wiederholten Beschreibung abgesehen wird.

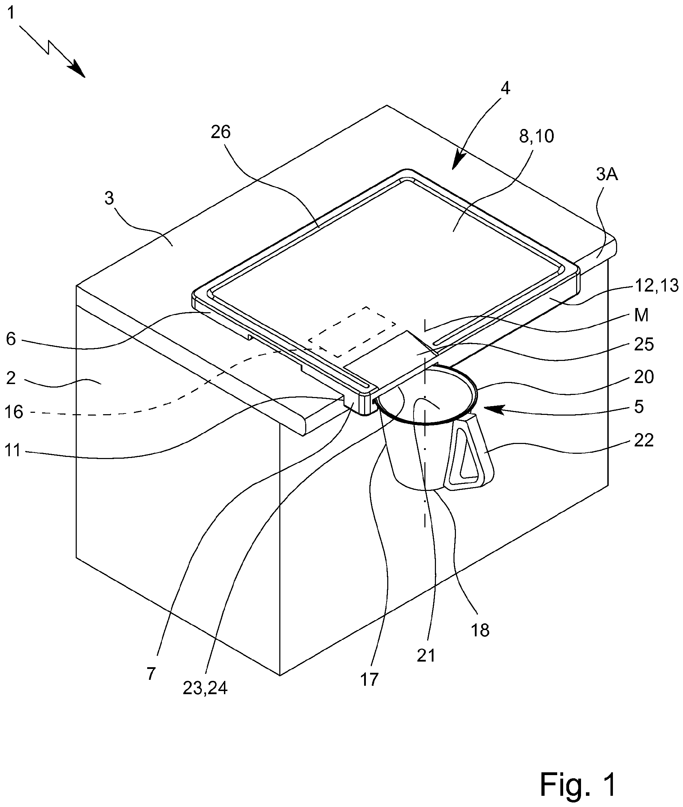

Fig. 1 zeigt schematisch ein vorschlagsgemäßes System 1 in einer Küche mit einem Unterschrank 2 und einer auf dem Unterschrank 2 montierten Arbeitsplatte 3. Jedoch kann das System 1 auch für sonstige Zwecke oder in einem sonstigen Umfeld, beispielsweise in einem Labor, eingesetzt werden.

Das System 1 weist eine vorschlagsgemäße Arbeitsunterlage 4, ein Gefäß 5 und optional die Arbeitsplatte 3 auf.

Die Darstellung gemäß Fig. 1 zeigt das System 1 bzw. die Arbeitsunterlage 4 in der üblichen Gebrauchslage und das Gefäß 5 in der Halteposition.

Die Gebrauchslage der Arbeitsunterlage 4 ist die (räumliche) Lage/Position der Arbeitsunterlage 4, in der die Arbeitsunterlage 4 auf der Arbeitsplatte 3 im Wesentlichen aufliegt bzw. die Arbeitsunterlage 4 horizontal ausgerichtet ist.

Die Halteposition des Gefäßes 5 ist die (räumliche) Lage/Position des Gefäßes 5, in der das Gefäß 5 von der Arbeitsunterlage 4 gehalten wird, wie im Folgenden noch näher erläutert wird.

Das System 1 ist insbesondere als Küchensystem ausgebildet bzw. für den Einsatz in einer Küche vorgesehen. Beispielsweise kann das System 1 einen Teil einer Küche, insbesondere einer Küchenzeile bzw. eines Küchenblocks, bilden, wobei die Arbeitsplatte 3 als Küchenarbeitsplatte ausgebildet ist, auf die die Arbeitsunterlage 4 gelegt wird.

Wie eingangs bereits erläutert, ist die Arbeitsunterlage 4 vorzugsweise als Schneidebrett zum Schneiden von Lebensmitteln ausgebildet. Insbesondere dient die Arbeitsunterlage 4 als Schutz der Arbeitsplatte 3 bei der Zubereitung von Lebensmitteln. Es sind jedoch auch andere Einsatzmöglichkeiten denkbar.

Die Arbeitsunterlage 4 kann vollständig oder teilweise aus Kunststoff, Holz, Glas, Stein oder Keramik hergestellt sein. Es ist jedoch bevorzugt, dass die Arbeitsunterlage 4 aus einem einzigen Material hergestellt und einstückig ausgebildet ist.

Die Arbeitsunterlage 4 weist einen insbesondere plattenartigen bzw. quaderförmigen Grundkörper 6 und eine vom Grundkörper 6 abstehende bzw. in der Gebrauchslage der Arbeitsunterlage 4 nach unten ragende Leiste 7 auf.

Vorzugsweise sind der Grundkörper 6 und die Leiste 7 einstückig ausgebildet. Es ist jedoch auch möglich, dass die Leiste 7 ein separates Bauteil ist, das form-, kraft- und/oder stoffschlüssig, insbesondere durch Verschrauben und/oder Leimen, an dem Grundkörper 6 befestigt ist. Beispielsweise ist es möglich, dass die Leiste 7 an ein konventionelles Schneidebrett montiert wird, um die vorschlagsgemäße Arbeitsunterlage 4 zu erhalten.

Die Arbeitsunterlage 4 bzw. der Grundkörper 6 weist eine Oberseite 8 und eine Unterseite 9 auf, wobei in der Gebrauchslage der Arbeitsunterlage 4 die Unterseite 9 unten angeordnet bzw. der Arbeitsplatte 3 zugewandt und die Oberseite 8 oben angeordnet bzw. der Arbeitsplatte 3 abgewandt ist.

Die Arbeitsunterlage 4 weist eine vorzugsweise zumindest im Wesentlichen rechteckige Arbeitsfläche 10 auf, wobei die Arbeitsfläche 10 durch die Oberseite 8 bzw. einen Teil der Oberseite 8 des Grundkörpers 6 gebildet ist.

Die Oberseite 8 bzw. Arbeitsfläche 10 ist vorzugsweise zumindest im Wesentlichen parallel zu der Unterseite 9 der Arbeitsunterlage 4 angeordnet. Es sind jedoch auch Lösungen möglich, bei denen die Oberseite 8 bzw. Arbeitsfläche 10 vollständig oder teilweise bzw. bereichsweise relativ zu der Unterseite 9 geneigt ist, wie im Folgenden noch näher erläutert wird.

Die Leiste 7 ist vorzugsweise als länglicher Vorsprung ausgebildet und ragt von der Unterseite 9 bzw. in der Gebrauchslage der Arbeitsunterlage 4 nach unten ab.

Bei der dargestellten Ausführungsform erstreckt sich die Leiste 7 über die gesamte Breite bzw. die gesamte Vorderseite der Arbeitsunterlage 4. Es sind jedoch auch andere Lösungen möglich, beispielsweise bei denen die Leiste 7 durch mehrere zueinander beabstandete Vorsprünge gebildet ist.

Die Leiste 7 weist eine Innenseite 11 und eine Außenseite 12 auf, wobei die Innenseite 11 in der Gebrauchslage der Arbeitsunterlage 4 an einer Vorderseite 3A der Arbeitsplatte 3 anliegt bzw. einen Anschlag für die Arbeitsplatte 3 bildet.

Die Innenseite 11 und die Außenseite 12 sind zumindest im Wesentlichen rechtwinklig zu der Oberseite 8 bzw. der Unterseite 9 des Grundkörpers 6 ausgerichtet.

Die Arbeitsunterlage 4 weist - auf einer in der Gebrauchslage der Arbeitsunterlage 4 einem Benutzer zugewandten Seite - eine Stirnfläche 13 auf, wobei die Außenseite 12 der Leiste 7 die Stirnfläche 13 bildet.

Die Arbeitsunterlage 4 kann mittels der Leiste 7 relativ zu der Arbeitsplatte 3 ausgerichtet werden, indem die Leiste 7 an die Arbeitsplatte 3 geschoben wird. Insbesondere wird durch die Leiste 7 verhindert, dass die Arbeitsunterlage 4 beim Gebrauch versehentlich nach hinten bzw. vom Benutzer weggeschoben wird.

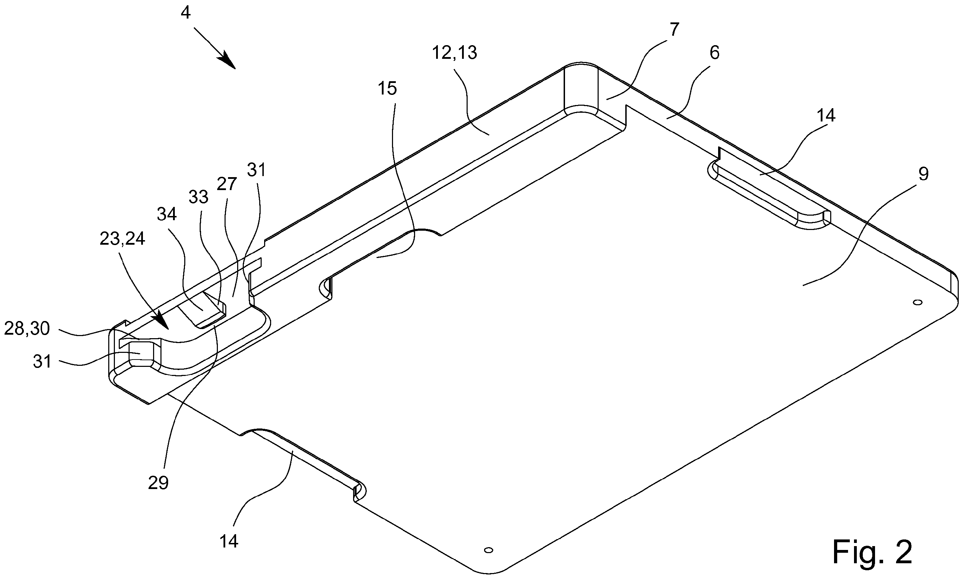

Optional ist die Arbeitsunterlage 4 mit einem oder mehreren Griffen 14, 15 ausgestattet, um die Handhabung der Arbeitsunterlage 4 zu vereinfachen, wie insbesondere Fig. 2 veranschaulicht.

Bei der dargestellten Ausführungsform weist die Arbeitsunterlage 4 zwei Seitengriffe 14 und einen Stirngriff 15 auf, wobei die Seitengriffe 14 jeweils durch eine Aussparung in dem Grundkörper 6 bzw. der Unterseite 9 und der Stirngriff 15 durch eine Aussparung in der Leiste 7 gebildet sind.

Wie in Fig. 1 durch Strichlinien angedeutet, kann die Arbeitsunterlage 4 eine Waage 16 aufweisen, vorzugsweise wobei die Waage 16 in die Arbeitsfläche 10 integriert ist. Insbesondere kann die Arbeitsunterlage 4 mit einem oder mehreren Drucksensoren ausgestattet sein, um beispielsweise das Gewicht von zubereiteten Lebensmitteln auf einem bestimmten bzw. vordefinierten Bereich der Arbeitsunterlage 4 zu bestimmen.

Die Waage 16 kann ein Display aufweisen (nicht dargestellt), um einem Benutzer das Gewicht anzuzeigen. Zusätzlich oder alternativ kann die Arbeitsunterlage 4 elektronisch, insbesondere drahtlos, mit einem externen Gerät, wie einem Mobiltelefon, verbindbar sein, um entsprechende Daten zu übermitteln und auf dem externen Gerät anzuzeigen.

Wie eingangs bereits erläutert, ist die Arbeitsunterlage 4 dazu ausgebildet, das Gefäß 5 zu halten, besonders bevorzugt seitlich bzw. randseitig/außermittig.

Das Gefäß 5 ist in die Leiste 7 bzw. in die Stirnfläche 13 der Arbeitsunterlage 4 einhängbar, und zwar auf einer einem Benutzer zugewandten Seite.

Bei dem Gefäß 5 handelt es sich vorzugsweise um ein Küchengerät oder einen Teil eines Küchengeräts, wie einen Mixer bzw. den Behälter eines Mixers, einen Kochtopf, einen Garbehälter oder dergleichen.

Bei der dargestellten Ausführungsform ist das Gefäß 5 zumindest im Wesentlichen rund und/oder zylinderförmig ausgebildet. Es sind jedoch auch Ausführungsformen möglich, bei denen das Gefäß 5 zumindest im Wesentlichen rechteckig ausgebildet ist.

Das Gefäß 5 weist eine Wandung 17 und einen Boden 18 auf, die einen Hohlraum 19 seitlich bzw. unten begrenzen.

Das Gefäß 5 weist einen insbesondere kragenartigen Rand 20 auf, wobei der Rand 20 eine Öffnung 21 des Gefäßes 5 seitlich bzw. radial begrenzt. Vorzugsweise ist der Rand 20 durch die Wandung 17 bzw. eine Bördelkante der Wandung 17 gebildet.

Optional ist das Gefäß 5 mit einem Griff 22 ausgestattet, um die Handhabung des Gefäßes 5 zu erleichtern.

Das Gefäß 5 weist eine Mittelachse M auf, wobei die Mittelachse M mittig durch die Öffnung 21 bzw. den Hohlraum 19 verläuft bzw. äquidistant zu dem Rand 20 beabstandet ist, wie in Fig. 1 angedeutet.

Vorzugsweise ist die Mittelachse M eine Längs- und/oder Symmetrieachse des vorzugsweise länglichen und/oder zumindest im Wesentlichen rotationssymmetrischen Gefäßes 5 bzw. des vorzugsweise zumindest im Wesentlichen kreisringförmigen Rands 20.

Wie bereits erläutert, zeigt Fig. 1 das System 1 bzw. die Arbeitsunterlage 4 in der Gebrauchslage mit eingehängtem Gefäß 5, in der die Arbeitsunterlage 4, insbesondere die Unterseite 9, flächig auf der Arbeitsplatte 3 aufliegt und die Innenseite 11 der Leiste 7 an der Vorderseite 3A der Arbeitsplatte 3 anliegt.

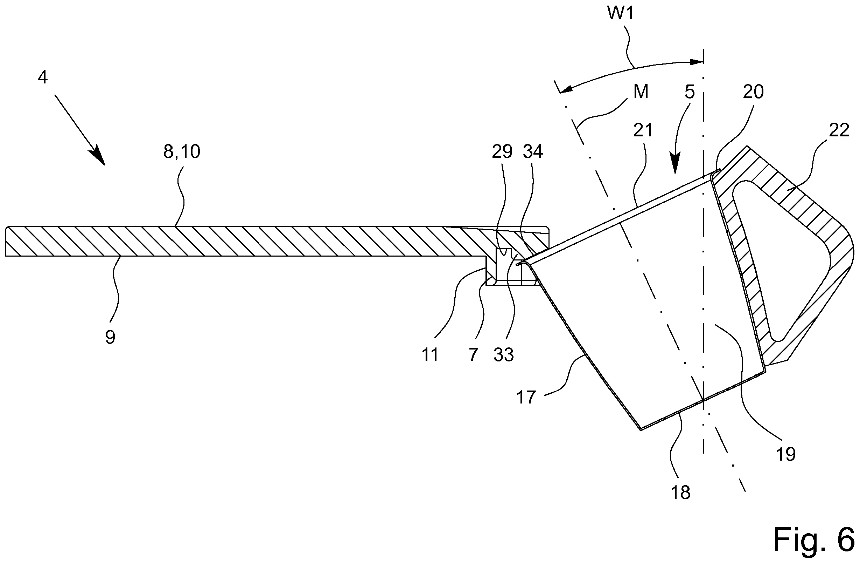

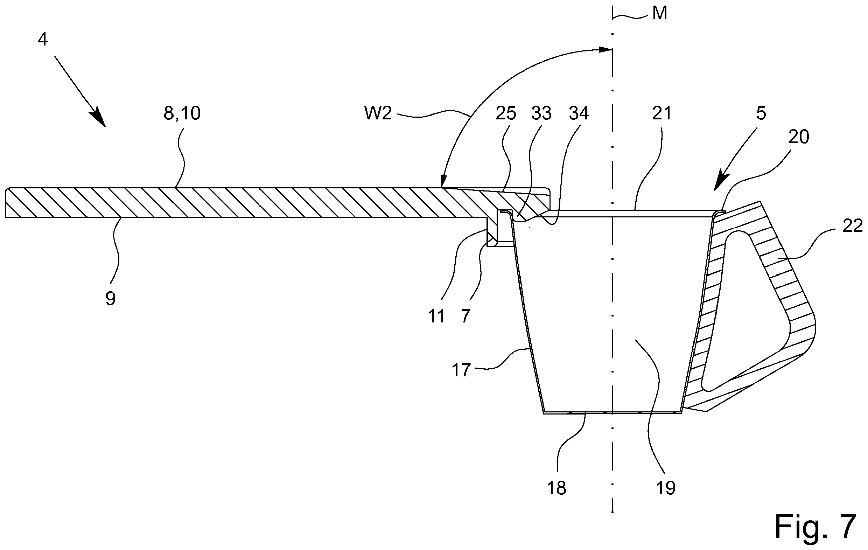

Das Gefäß 5 befindet sich in der Halteposition, in der das Gefäß 5 in die Arbeitsunterlage 4 (vollständig) eingehängt ist. Das Einhängen und Aushängen des Gefäßes 5 wird später anhand der Fig. 6 und 7 näher erläutert.

In der Halteposition ist das Gefäß 5 randseitig von der Arbeitsunterlage 4, insbesondere der Leiste 7, gehalten. Insbesondere ist in der Halteposition die Mittelachse M bzw. der Schwerpunkt des Gefäßes 5 von der Arbeitsunterlage 4 bzw. der Leiste 7 beabstandet, vorzugsweise um mehr als 3 cm oder 5 cm.

Die Arbeitsunterlage 4 bzw. die Arbeitsfläche 10 überdeckt die Öffnung 21 in der Halteposition nur partiell. Es ist bevorzugt, dass weniger als 50 %, vorzugsweise weniger als 40 % oder 25 %, der Öffnung 21 in der Halteposition von der Arbeitsunterlage 4 bzw. Arbeitsfläche 10 verdeckt sind. Auf diese Weise wird eine einfache Zufuhr von Lebensmitteln in das Gefäß 5 sichergestellt.

Das (leere) Gefäß 5 wiegt vorzugsweise mehr als 0,5 kg oder 1 kg und/oder weniger als 4 kg oder 3 kg und hat ein Füllvolumen von mehr als 1 Liter oder 1,5 Liter und/oder von weniger als 4 Liter oder 3 Liter.

Das Gewicht des Gefäßes 5 im gefüllten Zustand hängt maßgeblich vom Gewicht des Füllgutes ab.

Die Arbeitsunterlage 4 ist derart ausgelegt/dimensioniert, dass auch bei gefülltem Gefäß 5 - beispielsweise mit einem Gesamtgewicht von mehr als 3 kg oder 4 kg - das System 1 bzw. die Arbeitsunterlage 4 mit eingehängtem Gefäß 5 in der Gebrauchslage nicht umkippt.

Der Schwerpunkt des Systems 1, also der Arbeitsunterlage 4 mit eingehängtem Gefäß 5, ist folglich auch bei einem - beispielsweise mit Wasser - gefüllten Gefäß 5 nicht horizontal von der Arbeitsplatte 3 beabstandet, sondern liegt in der Gebrauchslage immer in oder vertikal unter dem Grundkörper 6.

Vor diesem Hintergrund beträgt das Gewicht der Arbeitsunterlage 4 mehr als 2 kg oder 3 kg, vorzugsweise mehr als 4 kg oder 5 kg, insbesondere mehr als 7 kg, und/oder weniger als 20 kg oder 15 kg.

Um den Schwerpunkt der Arbeitsunterlage 4 möglichst weit zu der Leiste 7 zu beabstanden, weist der Grundkörper 6 bzw. die Arbeitsfläche 10 vorzugsweise eine Tiefe von mehr als 300 mm oder 400 mm und/oder von weniger als 900 mm oder 600 mm auf.

Bei einer bevorzugten Ausführungsform weist die Arbeitsunterlage 4 ein (zusätzliches) Gewicht auf, um den Abstand zwischen dem Schwerpunkt der Arbeitsunterlage 4 und der Leiste 7 zu vergrößern. Beispielsweise kann das Gewicht in Form eines Metallkerns in die Arbeitsunterlage 4 eingelassen und/oder in Form einer Leiste auf der der Leiste 7 gegenüberliegenden Seite der Arbeitsunterlage 4 befestigt sein.

Die Breite des Grundkörpers 6 bzw. der Arbeitsfläche 10 beträgt vorzugsweise mehr als 200 mm oder 300 mm, insbesondere mehr als 400 mm, und/oder weniger als 800 mm, insbesondere weniger als 700 mm oder 600 mm.

Vorzugsweise weist der Grundkörper 6 eine Dicke von mehr als 10 mm, insbesondere von mehr als 20 mm, und/oder weniger als 50 mm oder 40 mm auf.

Gemäß einer alternativen Ausführungsform (nicht dargestellt) ist die Arbeitsunterlage 4 derart ausgelegt bzw. leicht/klein dimensioniert, dass sie an das Gefäß 5 hängbar ist, also das Gefäß 5 die Arbeitsunterlage 4 in der Halteposition hält. In diesem Fall ist es möglich, die Arbeitsunterlage 4 (zusammen mit dem Schnittgut) anzuheben und an dem Gefäß 5 zu fixieren, um das Schnittgut auf besonders einfache Weise direkt von der Arbeitsunterlage 4 in das Gefäß 5 zu überführen. Vorzugsweise wiegt die Arbeitsunterlage 4 bei einer derartigen Ausführungsform weniger als 1 kg, um ein Umkippen des Gefäßes 5 beim Einhängen der Arbeitsunterlage 4 zu verhindern.

In der Halteposition bzw. in der Gebrauchslage ist das Gefäß 5 bzw. die Öffnung 21 des Gefäßes 5 (vertikal) unterhalb der Arbeitsfläche 10 angeordnet bzw. (vertikal) zu der Arbeitsfläche 10 beabstandet, insbesondere derart, dass Lebensmittel von der Arbeitsfläche 10 in das Gefäß 5 geschoben werden können.

Wie eingangs bereits erläutert, weist die Arbeitsunterlage 4 eine Halteeinrichtung 23 zum Einhängen/Halten des Gefäßes 5 auf, wobei die Leiste 7 die Halteeinrichtung 23 bildet bzw. die Halteeinrichtung 23 in die Leiste 7 integriert ist.

Die Halteeinrichtung 23 weist eine Aufnahme 24 für das Gefäß 5 auf, wobei die Aufnahme 24 durch eine Aussparung in der Leiste 7, insbesondere auf der Außenseite 12 der Leiste 7, gebildet ist. Die Aufnahme 24 kann beispielsweise in die Leiste 7 gefräst sein.

Bei der dargestellten Ausführungsform weist die Arbeitsunterlage 4 lediglich eine Halteeinrichtung 23 auf. Es sind jedoch auch Ausführungsformen möglich, bei denen die Arbeitsunterlage 4 mehrere Halteeinrichtungen 23 aufweist. Beispielsweise können bei einer derartigen Ausführungsform mehrere Halteeinrichtungen 23 über die Leiste 7 verteilt und/oder mehrere Halteeinrichtungen 23 unterschiedlich dimensioniert sein, um verschiedene Gefäße 5 bzw. Gefäße 5 unterschiedlicher Größe zu halten.

Es ist bevorzugt, dass die gesamte Arbeitsunterlage 4, also der Grundkörper 6, die Leiste 7 und die Halteeinrichtung 23, einstückig ausgebildet ist bzw. sind. Insbesondere ist die Arbeitsunterlage 4 starr ausgebildet bzw. weist die Arbeitsunterlage 4 keine beweglichen Teile auf. Dies ermöglicht eine sehr kompakte und robuste Bauweise der Arbeitsunterlage 4.

Vorzugsweise ist die Halteeinrichtung 23 außermittig und/oder im Bereich einer Ecke der Arbeitsunterlage 4 angeordnet (in der Darstellung gemäß Fig. 1 im Bereich der linken Ecke). Auf diese Weise wird ein Arbeiten auf bzw. an der Arbeitsunterlage 4 nicht bzw. nicht wesentlich durch das eingehängte Gefäß 5 beeinträchtigt.

Optional ist die Arbeitsfläche 10 im Bereich der Halteeinrichtung 23 geneigt. Bei der dargestellten Ausführungsform ist die Arbeitsunterlage 4 mit einer Zuführschräge 25 ausgestattet, die zur Stirnfläche 13 im Bereich der Halteeinrichtung 23 geneigt ist, um eine Zufuhr der zubereiteten Lebensmittel in das Gefäß 5 zu vereinfachen.

Darüber hinaus kann die Arbeitsunterlage 4 eine Rinne 26 aufweisen, die entlang des Rands der Oberseite 8 verläuft bzw. die Arbeitsfläche 10 seitlich begrenzt. In der Rinne 26 können sich Flüssigkeiten sammeln, insbesondere um die Arbeitsplatte 3 vor Verunreinigungen zu schützen.

Vorzugsweise ist die Rinne 26 im Bereich der Halteeinrichtung 23 bzw. der Zuführschräge 25 unterbrochen, um eine Zufuhr der zubereiteten Lebensmittel in das Gefäß 5 nicht zu behindern.

Weiter kann die Arbeitsunterlage 4 eine Positionierhilfe für das Gefäß 5 aufweisen (nicht dargestellt), wobei die Positionierhilfe als (kreisförmige) Vertiefung in der Arbeitsfläche 10 ausgebildet sein kann.

Im Folgenden wird der bevorzugte konstruktive Aufbau der Halteeinrichtung 23 anhand der Fig. 2 bis 5 näher erläutert. Anschließend wird das Einhängen bzw. Aushängen des Gefäßes 5 in bzw. aus der Halteeinrichtung 23 anhand der Fig. 6 und 7 erläutert.

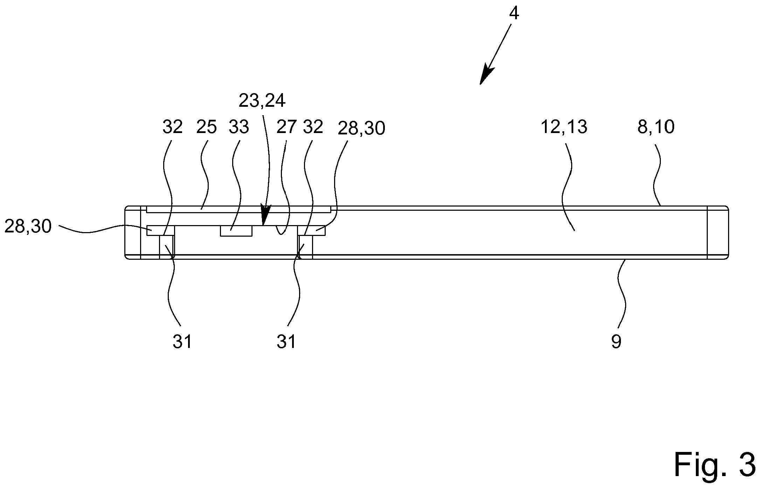

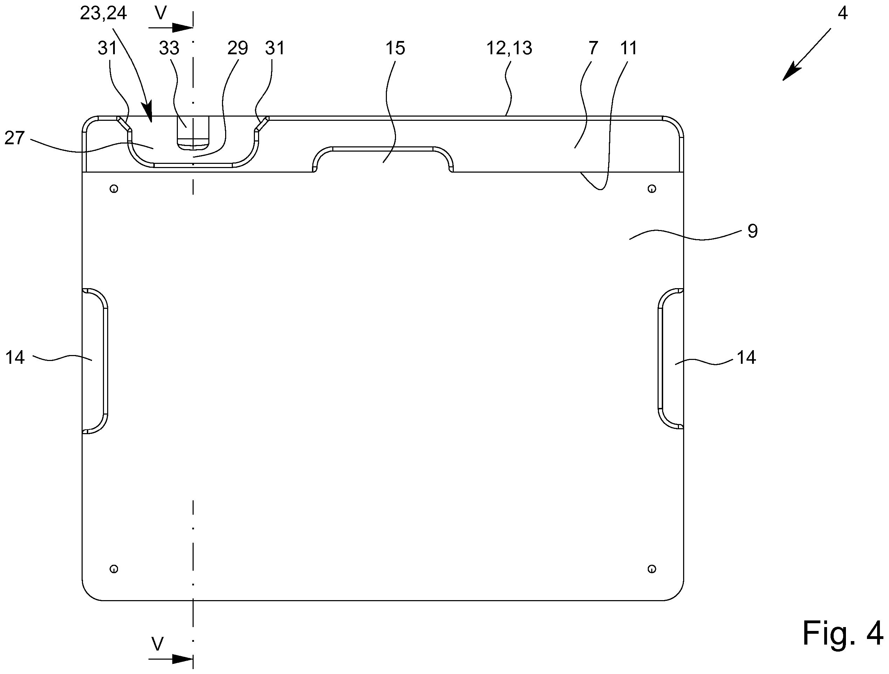

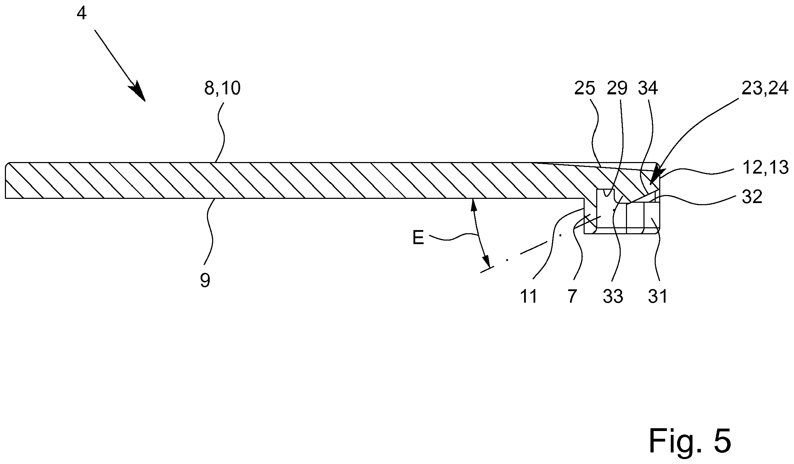

Fig. 2 ist eine perspektivische Darstellung der Arbeitsunterlage 4 von unten. Fig. 3 ist eine schematische Ansicht der Arbeitsunterlage 4 von der Seite. Fig. 4 ist eine schematische Ansicht der Arbeitsunterlage 4 von unten. Fig. 5 zeigt einen schematischen Schnitt der Arbeitsunterlage 4 entlang der in Fig. 4 eingezeichneten Schnittlinie V-V.

Die Halteeinrichtung 23 wird durch die Leiste 7 gebildet. Die Aufnahme 24 wird für das Gefäß 5 seitlich und nach oben bzw. zu der Arbeitsfläche 10 durch die Leiste 7 begrenzt.

Die Halteeinrichtung 23 bzw. die Aufnahme 24 ist vorzugsweise - in der Gebrauchslage der Arbeitsunterlage 4 - nach vorne und nach unten geöffnet, um ein Einhängen des Gefäßes 5 zu ermöglichen.

Wie bereits erläutert, ist die Halteeinrichtung 23 bzw. die Aufnahme 24 vorzugsweise kreissegmentartig ausgebildet und/oder dazu ausgebildet, ein zumindest im Wesentlichen rundes Gefäß 5, wie den Behälter eines Mixers, aufzunehmen.

Der Durchmesser der Halteeinrichtung 23 bzw. Aufnahme 24 entspricht vorzugsweise zumindest im Wesentlichen dem Außendurchmesser des Gefäßes 5, insbesondere des Rands 20.

Vorzugsweise weist die Halteeinrichtung 23 bzw. Aufnahme 24 und/oder das Gefäß 5 bzw. dessen Öffnung 21 einen Durchmesser von mehr als 100 mm oder 120 mm, insbesondere mehr als 140 mm, und/oder weniger als 300 mm oder 260 mm, insbesondere weniger als 220 mm, auf.

Die Halteeinrichtung 23 weist eine Deckseite 27 und mindestens ein, in der dargestellten Ausführungsform zwei, Randseiten 28 auf, wobei die Deckseite 27 die Aufnahme 24 nach oben und die Randseiten 28 die Aufnahme 24 seitlich begrenzen.

Die Deckseite 27 ist der Arbeitsfläche 10 abgewandt und in der dargestellten Ausführungsform unmittelbar unterhalb der optionalen Zuführschräge 25 angeordnet.

Die Deckseite 27 bildet einen Anschlag für das Gefäß 5, insbesondere den Rand 20, nach oben bzw. zur Arbeitsfläche 10, im Folgenden oberseitiger Anschlag 29 genannt.

Durch die Deckseite 27 bzw. den oberseitigen Anschlag 29 kann das Gefäß 5 derart gehalten werden, dass die Öffnung 21 zumindest im Wesentlichen horizontal ausgerichtet ist und ein Verkippen der Öffnung 21 nach vorne verhindert bzw. begrenzt wird.

Insbesondere können durch die Deckseite 27 bzw. den oberseitigen Anschlag 29 Kippmomente des Gefäßes 5 aufgenommen werden, und zwar derart, dass das Gefäß 5 gegen ein Herausfallen aus der Halteeinrichtung 23 gesichert ist.

Die Randseiten 28 bilden jeweils einen Anschlag für das Gefäß 5, insbesondere den Rand 20, in und quer zur Einführrichtung bzw. in eine Richtung parallel zur Leiste 7, im Folgenden seitlicher Anschlag 30 genannt.

Mit anderen Worten, durch die Deckseite 27 und die Randseiten 28 ist die Bewegung des Gefäßes 5 in der Halteposition nach oben, in Einführrichtung und quer zur Einführrichtung bzw. zu den Seiten begrenzt.

Die Halteeinrichtung 23 weist mindestens ein Halteelement 31 auf, vorzugsweise wobei das Halteelement 31 seitlich bzw. von der Randseite 28 in die Aufnahme 24 hineinragt.

Das Halteelement 31 ist zum Untergreifen des Rands 20 ausgebildet und/oder bildet einen Anschlag für das Gefäß 5, insbesondere den Rand 20, nach unten bzw. in eine zu der Arbeitsfläche 10 entgegengesetzte Richtung, im Folgenden unterseitiger Anschlag 32 genannt.

Durch das Halteelement 31 ist die Bewegung des Gefäßes 5 in der Halteposition folglich nach unten begrenzt.

Bei der dargestellten Ausführungsform ist das Halteelement 31 durch einen Vorsprung gebildet, vorzugsweise wobei das Halteelement 31 einstückig mit der Leiste 7 ausgebildet ist. Es sind jedoch auch konstruktive Lösungen möglich, bei denen das Halteelement 31 durch ein separates Bauteil gebildet ist. Beispielsweise kann das Halteelement 31 als Stift ausgebildet sein, der in eine entsprechende Vertiefung/Bohrung in die Leiste 7 eingesteckt oder geschraubt ist.

Bei der dargestellten Ausführungsform weist die Halteeinrichtung 23 zwei gegenüberliegende Randseiten 28 und zwei Halteelemente 31 auf. Hier sind jedoch auch andere Lösungen möglich. Die folgenden, eine Randseite 28 bzw. ein Halteelement 31 betreffenden Ausführungen gelten entsprechend für die andere Randseite 28 bzw. das andere Halteelement 31.

Wie insbesondere die Seitenansicht gemäß Fig. 3 veranschaulicht, ist das Halteelement 31 (vertikal) von der Deckseite 27 beabstandet, vorzugsweise um mehr als 5 mm und/oder weniger als 20 mm oder 15 mm und/oder derart, dass zwischen Halteelement 31 und der Deckseite 27 der Rand 20 des Gefäßes 5 - insbesondere mit einem Spiel von mindestens 2 mm und/oder höchstens 10 mm - aufgenommen werden kann.

Zu diesem Zweck ist der Abstand zwischen der Deckseite 27 und dem Halteelement 31 bzw. dem unterseitigen Anschlag 32 größer als die Dicke des Rands 20, vorzugsweise um mehr als das Zwei- oder Dreifache. Auf diese Weise kann das Gefäß 5 besonders einfach bzw. ohne Verkanten in die Halteeinrichtung 23 eingeführt werden.

Optional ist die Deckseite 27 geneigt und/oder verjüngt sich die Aufnahme 24 nach hinten bzw. in die Einführrichtung (nicht dargestellt), insbesondere um das Gefäß 5 beim Einführen auszurichten.

Zusätzlich oder alternativ ist der oberseitige Anschlag 29 (zumindest hinten) durch eine Erhöhung, wie einen Vorsprung der Deckseite 27, gebildet (nicht dargestellt).

Auf diese Weise kann der (vertikale) Abstand zwischen dem oberseitigen Anschlag 29 und dem Halteelement 31 bzw. dem unterseitigen Anschlag 32 kleiner als der (vertikale) Abstand zwischen der dem Halteelement 31 unmittelbar gegenüberliegenden Fläche der Deckseite 27 und dem Halteelement 31 sein und/oder zumindest im Wesentlichen der Dicke des Rands 20 entsprechen. Dadurch ist es möglich, das Gefäß 5 bzw. dessen Mittelachse M in der Halteposition - trotz des größeren Abstandes zwischen Halteelement 31 und Deckseite 27 - (genau) vertikal auszurichten bzw. derart zu halten, dass die durch die Öffnung 21 gebildete Ebene (genau) parallel zu der Arbeitsfläche 10 bzw. die Mittelachse M (genau) orthogonal zu der Arbeitsfläche 10 ausgerichtet ist.

Die Arbeitsunterlage 4 weist ein Sicherungselement 33 auf, wobei das Sicherungselement 33 das Gefäß 5 gegen ein (versehentliches) Herausziehen aus der Halteeinrichtung 23 bzw. der Aufnahme 24 sichert.

Wie insbesondere Fig. 2 und der schematische Schnitt gemäß Fig. 5 veranschaulichen, ragt das Sicherungselement 33 zumindest im Wesentlichen mittig in die Halteeinrichtung 23 bzw. die Aufnahme 24 hinein und/oder von der Deckseite 27 ab. Insbesondere ragt das Sicherungselement 33 in der Gebrauchslage der Arbeitsunterlage 4 nach unten ab.

Das Sicherungselement 33 ist vorzugsweise durch einen Vorsprung der Deckseite 27 gebildet, um einen (inneren) Anschlag für das Gefäß 5, insbesondere den Rand 20, zu bilden.

Es ist bevorzugt, dass das Sicherungselement 33 einstückig mit der Halteeinrichtung 23 bzw. der Deckseite 27 ausgebildet ist. Hier sind jedoch auch andere Lösungen möglich.

In der Halteposition greift das Sicherungselement 33 - vorzugsweise von oben bzw. randseitig - in das Gefäß 5 und sichert auf diese Weise das Gefäß 5 formschlüssig gegen ein (horizontales) Herausziehen aus der Halteposition bzw. Halteeinrichtung 23, wie im Folgenden noch näher erläutert wird.

Das Sicherungselement 33 ist vorzugsweise keilförmig ausgebildet und/oder weist eine optionale Einführschräge 34 für das Gefäß 5 auf, wie insbesondere Fig. 2 und 5 veranschaulichen.

Die Einführschräge 34 bildet eine Führung bzw. Gleitfläche für das Gefäß 5 bzw. den Rand 20, um das Einhängen bzw. Einschieben des Gefäßes 5 in die Halteeinrichtung 23 zu erleichtern.

Die Einführschräge 34 ist relativ zu der Arbeitsfläche 10 und/oder Deckseite 27 geneigt, vorzugsweise um einen Einführwinkel E von mehr als 10° oder 20° und/oder weniger als 40° oder 30°.

Durch die Einführschräge 34 des Sicherungselements 33 wird das Gefäß 5 folglich beim Einführen bzw. Einschieben in die Halteeinrichtung 23 bzw. Aufnahme 24 verkippt, wie im Folgenden ausführlicher anhand der Fig. 6 und 7 beschrieben wird.

Fig. 6 zeigt die Arbeitsunterlage 4 beim Einhängen des Gefäßes 5 in die Arbeitsunterlage 4, wobei das Gefäß 5 relativ zur Arbeitsunterlage 4 verkippt ist, der zwischen der Arbeitsfläche 10 und der Mittelachse M eingeschlossene Winkel also kleiner als 90° ist. Fig. 7 zeigt die Halteposition, in der das Gefäß 5 vollständig in die Arbeitsunterlage 4 eingehängt ist.

Um das Gefäß 5 in die Arbeitsunterlage 4 einzuhängen, wird der Rand 20 des Gefäßes 5 in die Halteeinrichtung 23 bzw. die Aufnahme 24, genauer gesagt in den Spalt zwischen den Halteelementen 31 und der Deckseite 27, geschoben.

Durch die Einführschräge 34 des Sicherungselements 33 wird der Rand 20 beim Einführen des Gefäßes 5 in die Arbeitsunterlage 4 nach unten gedrückt bzw. das Gefäß 5 relativ zu der Arbeitsunterlage 4 verkippt, wie in Fig. 6 dargestellt. Dadurch wird der zwischen der Mittelachse M des Gefäßes 5 und der Arbeitsfläche 10 eingeschlossene Winkel verkleinert bzw. der zwischen der Mittelachse M und der Vertikalen eingeschlossene Winkel vergrößert bis sich der Kippwinkel W1 einstellt.

Der Kippwinkel W1 ist der zwischen der Mittelachse M des Gefäßes 5 und der Vertikalen bzw. der zu der Arbeitsfläche 10 Senkrechten eingeschlossene Winkel, der zum Einhängen und Aushängen des Gefäßes 5 in bzw. aus der Arbeitsunterlage 4 erforderlich ist. Insbesondere ist der Kippwinkel W1 der erforderliche Winkel, um den das Gefäß 5 - ausgehend von der vertikalen Ausrichtung - relativ zur Arbeitsunterlage 4 geneigt werden muss, um an dem Sicherungselement 33 vorbeigleiten zu können. Die Größe des Kippwinkels W1 ist folglich von der Höhe des Sicherungselements 33 abhängig.

Vorliegend entspricht der Kippwinkel W1 dem durch die Einführschräge 34 definierten Einführwinkel E.

Vorzugsweise stellt sich der Kippwinkel W1 beim Einführen des Gefäßes 5 in die Arbeitsunterlage 4 durch die Einführschräge 34 selbsttätig ein.

Der Kippwinkel W1 ist kleiner als 90° oder 60°, insbesondere kleiner als 45°, um die Gefahr zu reduzieren, dass beim Ein- bzw. Aushängen des Gefäßes 5 Flüssigkeiten, Schnittgut o. dgl. entweicht. Besonders bevorzugt ist der Kippwinkel W1 größer als 10° und kleiner als 30°.

Während des Einführens des Gefäßes 5 in die Halteeinrichtung 23 wird der Rand 20 des Gefäßes 5 durch die Halteelemente 31 bzw. den von diesen gebildeten unteren Anschlägen 32 von unten gehalten.

Sobald das Gefäß 5 vollständig in die Halteeinrichtung 23 bzw. Aufnahme 24 eingeführt, der Rand 20 also hinter das Sicherungselement 33 geschoben ist bzw. die Randseiten 28 beidseitig berührt, kann das Gefäß 5 losgelassen bzw. der zwischen der Mittelachse M und der Arbeitsfläche 10 eingeschlossene Winkel (wieder) vergrößert werden.

Das Gefäß 5 kann anschließend die Halteposition einnehmen bzw. derart ausgerichtet werden, dass die durch die Öffnung 21 gebildete Ebene zumindest im Wesentlichen parallel zu der von der Arbeitsfläche 10 gebildeten Ebene ausgerichtet ist bzw. sich ein Haltewinkel W2 zwischen der Arbeitsfläche 10 und der Mittelachse M einstellt.

Fig. 7 zeigt das System 1 in der Halte- bzw. Endposition, in der das Gefäß 5 vollständig in die Arbeitsunterlage 4 eingeführt ist und der Winkel zwischen der Arbeitsfläche 10 und der Mittelachse M dem Haltewinkel W2 entspricht.

Der Haltewinkel W2 ist der zwischen der Mittelachse M des Gefäßes 5 und der Arbeitsfläche 10 eingeschlossene Winkel in der Halteposition. Vorzugsweise beträgt der Haltewinkel W2 zumindest im Wesentlichen, besonders bevorzugt genau 90° in der Halteposition.

In der Halteposition ist das Gefäß 5 durch das Sicherungselement 33 formschlüssig gegen ein (geradliniges bzw. translatorisches) Herausziehen gesichert.

Um das Gefäß 5 von der Arbeitsunterlage 4, insbesondere der Halteeinrichtung 23, zu lösen, ist das Gefäß 5 relativ zu der Arbeitsunterlage 4 bzw. auf den Halteelementen 31 zu verkippen, und zwar derart, dass sich der Kippwinkel W1 einstellt bzw. der Rand 20 des Gefäßes 5 an dem Sicherungselement 33 vorbeigleiten kann.

Das Gefäß 5 ist zum Aushängen derart weit zu verkippen, bis das Sicherungselement 33 nicht mehr in das Gefäß 5 bzw. die Öffnung 21 eingreift. Sodann kann das Gefäß 5 - in der verkippten Position - aus der Halteeinrichtung 23 bzw. Aufnahme 24 herausgezogen und damit von der Arbeitsunterlage 4 gelöst werden.

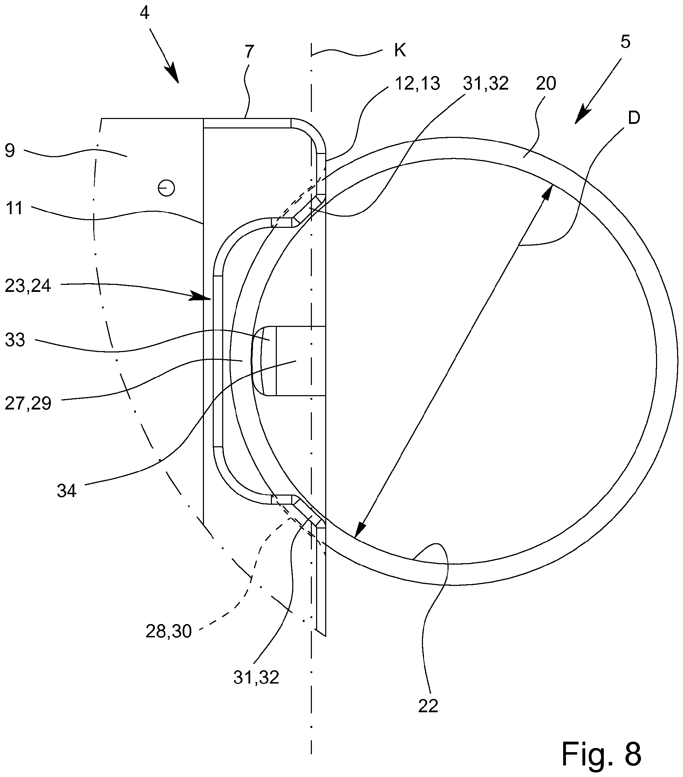

Fig. 8 zeigt die Arbeitsunterlage 4 im Bereich der Halteeinrichtung 23 von unten und mit dem hier nur schematisch angedeuteten Gefäß 5 in der Halteposition.

Fig. 8 veranschaulicht, dass das Gefäß 5 an mehreren, vorzugsweise mindestens drei oder vier, Anschlägen in bzw. von der Arbeitsunterlage 4 bzw. der Halteeinrichtung 23 gehalten bzw. gelagert ist, insbesondere wobei die Anschläge zu dem Schwerpunkt bzw. der Mittelachse M des Gefäßes 5 beabstandet sind bzw. in einem Kreissegment der kreisförmigen Öffnung 21 liegen.

Wie bereits erläutert, bilden die beiden Halteelemente 31 jeweils einen ersten, nämlich den unterseitigen Anschlag 32 für das Gefäß 5.

Da die beiden Halteelemente 31 den Rand 20 des Gefäßes 5 außermittig halten, eine gedachte Verbindungsstrecke zwischen den Halteelementen 31 bzw. den unterseitigen Anschlägen 32 also kleiner als der Durchmesser D des Gefäßes 5 bzw. dessen Öffnung 21 ist, erzeugt die Gewichtskraft des Gefäßes 5 ein Kippmoment um die von den Anschlägen 32 definierte Kippachse K.

Die Kippachse K verläuft im Bereich der Halteelemente 31, außermittig durch die Öffnung 21 und/oder zumindest im Wesentlichen parallel zu der Stirnfläche 13 der Arbeitsunterlage 4. Die Kippachse K ist in Fig. 8 nur schematisch angedeutet, da ihr Verlauf von den Auflagepunkten des Rands 20 auf den Halteelementen 31 abhängig ist und sich beim Ein- und Ausführen des Gefäßes 5 verschieben kann.

Die Deckseite 27 der Halteeinrichtung 23 bildet einen zweiten, nämlich den oberseitigen Anschlag 29 für den Rand 20 des Gefäßes 5, insbesondere um das Kippmoment aufzunehmen bzw. das Gefäß 5 gegen ein Verkippen um die Kippachse K zu sichern.

Die Randseiten 28 bilden jeweils einen dritten, nämlich den seitlichen Anschlag 30 für den Rand 20 des Gefäßes 5 in Einführrichtung und vorzugsweise auch quer zu dieser.

Darüber hinaus bildet das Sicherungselement 33 einen vierten, nämlich den inneren Anschlag für den Rand 20 in eine der Einführrichtung entgegengesetzte Richtung.

Auf diese Weise ist das Gefäß 5 in der Halteposition - bis auf das (notwendige) Spiel - gegen eine translatorische bzw. geradlinige Bewegung gesichert. Das Gefäß 5 weist in der Halteposition also - insbesondere aufgrund des oberseitigen Anschlags 29, der seitlichen Anschläge 30, der unterseitigen Anschläge 32 und des Sicherungselements 33 - keinen Translationsfreiheitsgrad auf.

Das Gefäß 5 ist in der Halteposition relativ zu der Arbeitsunterlage 4 lediglich verkippbar und/oder um die Mittelachse M drehbar. Mit anderen Worten, ausschließlich die Orientierung des Gefäßes 5 relativ zu der Arbeitsunterlage 4 ist in der Halteposition veränderbar.

Es ist also bevorzugt, dass das Gefäß 5 (ausschließlich) durch Kippen um die Kippachse K und anschließendes Herausziehen von der Halteeinrichtung 23 lösbar ist.

### Bezugszeichenliste:

- 1: System
- 2: Unterschrank
- 3: Arbeitsplatte
- 3A: Vorderseite
- 4: Arbeitsunterlage
- 5: Gefäß
- 6: Grundkörper
- 7: Leiste
- 8: Oberseite
- 9: Unterseite
- 10: Arbeitsfläche
- 11: Innenseite
- 12: Außenseite
- 13: Stirnfläche
- 14: Seitengriff
- 15: Stirngriff
- 16: Waage
- 17: Wandung
- 18: Boden
- 19: Hohlraum
- 20: Rand
- 21: Öffnung
- 22: Griff
- 23: Halteeinrichtung
- 24: Aufnahme
- 25: Zuführschräge
- 26: Rinne
- 27: Deckseite
- 28: Randseite
- 29: oberseitiger Anschlag
- 30: seitlicher Anschlag
- 31: Halteelement
- 32: unterseitiger Anschlag
- 33: Sicherungselement
- 34: Einführschräge

- E: Einführwinkel
- K: Kippachse
- M: Mittelachse
- W1: Kippwinkel
- W2: Haltewinkel

## Patentansprüche

1. Arbeitsunterlage (4) mit einer Arbeitsfläche (10) und einer Halteeinrichtung (23) zum Einhängen eines Gefäßes (5),
wobei die Arbeitsunterlage (4) einen plattenartigen Grundkörper (6) und eine vom Grundkörper (6) abstehende Leiste (7) aufweist, wobei die Leiste (7) die Halteeinrichtung (23) bildet,
wobei die Halteeinrichtung (23) eine Aufnahme (24) für das Gefäß (5) aufweist, wobei die Aufnahme (24) durch eine Aussparung in der Leiste (7) gebildet und seitlich und zu der Arbeitsfläche (10) durch die Leiste (7) begrenzt ist,
**dadurch gekennzeichnet, dass** die Arbeitsunterlage (4) ein Sicherungselement (33) aufweist, um das Gefäß (5) gegen ein Herausziehen aus der Halteeinrichtung (23) zu sichern, und
das Sicherungselement (33) zumindest im Wesentlichen mittig in die Aufnahme (24) der Halteeinrichtung (23) hineinragt.

2. Arbeitsunterlage nach Anspruch 1, **dadurch gekennzeichnet, dass** die Arbeitsunterlage (4) einstückig ausgebildet ist.

3. Arbeitsunterlage nach Anspruch 1 oder 2, **dadurch gekennzeichnet, dass** die Halteeinrichtung (23) ein Halteelement (31) zum Untergreifen eines Rands (20) des Gefäßes (5) aufweist.

4. Arbeitsunterlage nach einem der voranstehenden Ansprüche, **dadurch gekennzeichnet, dass** die Halteeinrichtung (23) kreissegmentartig und/oder zum Halten eines runden Gefäßes (5) ausgebildet ist.

5. Arbeitsunterlage nach einem der voranstehenden Ansprüche, **dadurch gekennzeichnet, dass** die Halteeinrichtung (23) auf einer Stirnfläche (13) der Arbeitsunterlage (4) angeordnet ist.

6. Arbeitsunterlage nach einem der voranstehenden Ansprüche, **dadurch gekennzeichnet, dass** die Arbeitsunterlage (4) eine Waage (16) aufweist, wobei die Waage (16) in die Arbeitsfläche (10) und/oder in die Halteeinrichtung (23) integriert ist.

7. Arbeitsunterlage nach einem der voranstehenden Ansprüche, **dadurch gekennzeichnet, dass** die Halteeinrichtung (23) einen oberseitigen Anschlag (29) für das Gefäß (5) aufweist, um das Gefäß (5) gegen ein Verkippen zu sichern.

8. Arbeitsunterlage nach einem der voranstehenden Ansprüche, **dadurch gekennzeichnet, dass** das Sicherungselement (33) keilförmig ausgebildet ist.

9. Arbeitsunterlage nach einem der voranstehenden Ansprüche, **dadurch gekennzeichnet, dass** die Arbeitsfläche (10) im Bereich der Halteeinrichtung (23) geneigt ist und/oder eine Zuführschräge (25) aufweist.

10. Arbeitsunterlage nach einem der voranstehenden Ansprüche, **dadurch gekennzeichnet, dass** die Arbeitsfläche (10) eine randseitige Rinne (26) aufweist, wobei die Rinne (26) im Bereich der Halteeinrichtung (23) unterbrochen ist.

11. System (1) mit einer Arbeitsunterlage (4) und einem vorzugsweise topfförmigen Gefäß (5),
wobei die Arbeitsunterlage (4) eine Halteeinrichtung (23) zum Einhängen des Gefäßes (5) aufweist, und
wobei die Arbeitsunterlage (4) nach einem der voranstehenden Ansprüche ausgebildet ist.

12. System nach Anspruch 11, **dadurch gekennzeichnet, dass** das Gefäß (5) zumindest im Wesentlichen rund ausgebildet ist und randseitig in die Halteeinrichtung (23) eingehängt oder einhängbar ist.

13. System nach Anspruch 11 oder 12, **dadurch gekennzeichnet, dass** die Arbeitsunterlage (4) ein vorzugsweise keilförmiges Sicherungselement (33) aufweist, wobei das Sicherungselement (33) in der Halteposition des Gefäßes (5) - insbesondere von oben bzw. randseitig - in das Gefäß (5) eingreift und/oder das Gefäß (5) formschlüssig gegen ein Herausziehen aus der Halteeinrichtung (23) sichert.

14. System nach einem der Ansprüche 11 bis 13, **dadurch gekennzeichnet, dass** das Gefäß (5) (ausschließlich) durch Kippen des Gefäßes (5) relativ zu der Arbeitsunterlage (4) von der Halteeinrichtung (23) lösbar ist.

## Claims

1. Working support (4) with a working surface (10) and a holding device (23) for suspending a vessel (5),
wherein the working support (4) has a plate-like base body (6) and a bar (7) projecting from the base body (6), the bar (7) forming the holding device (23),
the holding device (23) having a receptacle (24) for the vessel (5), the receptacle (24) being formed by a recess in the bar (7) and being bounded laterally and towards the working surface (10) by the bar (7),
**characterized in that** the working support (4) has a securing element (33) for securing the vessel (5) against being pulled out of the holding device (23), and
wherein the securing element (33) projects at least substantially centrally into the receptacle (24) of the holding device (23).

2. Working support according to claim 1, **characterized in that** the working support (4) is formed in one piece.

3. Working support according to claim 1 or 2, **characterized in that** the holding device (23) has a holding element (31) for engaging under an edge (20) of the vessel (5).

4. Working support according to one of the preceding claims, **characterized in that** the holding device (23) is designed in the manner of a segment of a circle and/or for holding a round vessel (5).

5. Working support according to one of the preceding claims, **characterized in that** the holding device (23) is arranged on an end face (13) of the working support (4).

6. Working support according to one of the preceding claims, **characterized in that** the working support (4) has a scale (16), the scale (16) being integrated into the working surface (10) and/or into the holding device (23).

7. Working support according to one of the preceding claims, **characterized in that** the holding device (23) has an upper stop (29) for the vessel (5) in order to secure the vessel (5) against tilting.

8. Working support according to one of the preceding claims, **characterized in that** the securing element (33) is wedge-shaped.

9. Working support according to one of the preceding claims, **characterized in that** the working surface (10) is inclined in the region of the holding device (23) and/or has a feed slope (25).

10. Working support according to one of the preceding claims, **characterized in that** the working surface (10) has a groove (26) at the edge, the groove (26) being interrupted in the region of the holding device (23).

11. System (1) with a working support (4) and a preferably pot-shaped vessel (5),
the working support (4) having a holding device (23) for suspending the vessel (5), and
wherein the working support (4) is formed according to one of the preceding claims.

12. System according to claim 11, **characterized in that** the vessel (5) is at least substantially round and is hooked or hookable into the holding device (23) at the edge.

13. System according to claim 11 or 12, **characterized in that** the working support (4) has a preferably wedge-shaped securing element (33), the securing element (33) engaging in the vessel (5) in the holding position of the vessel (5) - in particular from above or at the edge - and/or securing the vessel (5) in a form-fitting manner against being pulled out of the holding device (23).

14. System according to one of claims 11 to 13, **characterized in that** the vessel (5) can be released from the holding device (23) (exclusively) by tilting the vessel (5) relative to the working support (4).

## Revendications

1. Support de travail (4) avec une surface de travail (10) et un dispositif de retenue (23) pour accrocher un récipient (5),
le support de travail (4) présentant un corps de base (6) en forme de plaque et une barre (7) dépassant du corps de base (6), la barre (7) formant le dispositif de retenue (23),
le dispositif de retenue (23) présente un logement (24) pour le récipient (5), le logement (24) étant formé par un évidement dans la barre (7) et étant limité latéralement et vers la surface de travail (10) par la barre (7),
**caractérisé en ce que** le support de travail (4) comprend un élément de sécurité (33) pour empêcher le récipient (5) d'être retiré du dispositif de retenue (23), et
l'élément de sécurité (33) pénétrant au moins sensiblement au centre du logement (24) du dispositif de retenue (23).

2. Support de travail selon la revendication 1, **caractérisé en ce que** le support de travail (4) est réalisé d'une seule pièce.

3. Support de travail selon la revendication 1 ou 2, **caractérisé en ce que** le dispositif de retenue (23) présente un élément de maintien (31) pour passer sous un bord (20) du récipient (5).

4. Support de travail selon l'une des revendications précédentes, **caractérisé en ce que** le dispositif de retenue (23) est conçu en forme de segment de cercle et/ou pour maintenir un récipient rond (5).

5. Support de travail selon l'une des revendications précédentes, **caractérisé en ce que** le dispositif de retenue (23) est disposé sur une surface frontale (13) du support de travail (4).

6. Support de travail selon l'une des revendications précédentes, **caractérisé en ce que** le support de travail (4) présente une balance (16), la balance (16) étant intégrée dans la surface de travail (10) et/ou dans le dispositif de retenue (23).

7. Support de travail selon l'une des revendications précédentes, **caractérisé en ce que** le dispositif de retenue (23) présente une butée supérieure (29) pour le récipient (5), afin d'empêcher le récipient (5) de basculer.

8. Support de travail selon l'une des revendications précédentes, **caractérisé en ce que** l'élément de sécurité (33) est en forme de coin.

9. Support de travail selon l'une des revendications précédentes, **caractérisé en ce que** la surface de travail (10) est inclinée dans la zone du dispositif de retenue (23) et/ou présente une inclinaison d'alimentation (25).

10. Support de travail selon l'une des revendications précédentes, **caractérisé en ce que** la surface de travail (10) présente une rainure (26) sur le bord, la rainure (26) étant interrompue dans la zone du dispositif de retenue (23).

11. Système (1) avec un support de travail (4) et un récipient (5) de préférence en forme de pot,
le support de travail (4) présentant un dispositif de retenue (23) pour accrocher le récipient (5), et
le support de travail (4) étant conçu selon l'une des revendications précédentes.

12. Système selon la revendication 11, **caractérisé en ce que** le récipient (5) est au moins essentiellement rond et peut être accroché ou suspendu du côté du bord dans le dispositif de retenue (23).

13. Système selon la revendication 11 ou 12, **caractérisé en ce que** le support de travail (4) présente un élément de sécurité (33) de préférence en forme de coin, l'élément de sécurité (33) s'engageant dans le récipient (5) dans la position de maintien du récipient (5) - en particulier par le haut ou par le bord - et/ou bloquant le récipient (5) par complémentarité de forme pour l'empêcher d'être retiré du dispositif de retenue (23).

14. Système selon l'une des revendications 11 à 13, **caractérisé en ce que** le récipient (5) peut être détaché du dispositif de retenue (23) (exclusivement) par basculement du récipient (5) par rapport au support de travail (4).
